Europäisches Patentamt

European Patent Office

Office européen des brevets

(11) Numéro de publication: **0 312 667 B1**

## (12) FASCICULE DE BREVET EUROPEEN

(45) Date de publication de fascicule du brevet:
09.10.91

(51) Int. Cl.⁵: **A23J 1/00**

(21) Numéro de dépôt: 87402399.7

(22) Date de dépôt: 23.10.87

(54) **Procédé et installation de production, à partir d'un substrat végétal hydrocarboné quelconque, d'un produit naturel alimentaire, et produit obtenu par ce procédé.**

(43) Date de publication de la demande:
26.04.89 Bulletin 89/17

(45) Mention de la délivrance du brevet:
09.10.91 Bulletin 91/41

(84) Etats contractants désignés:
AT BE CH DE ES GB GR IT LI LU NL SE

(56) Documents cités:
FR-A- 2 165 191
FR-A- 2 541 088
US-A- 3 958 015
US-A- 4 056 636

(73) Titulaire: SOCIETE D'EXPLOITATION DE TECH-
NIQUES ALIMENTAIRES ( S.E.T.A.)sarl.
63, rue Drogon B.P. 545
F-57009 Metz Cédex(FR)

(72) Inventeur: Kanter, Nicole
16, avenue Foch
F-57000 Metz(FR)

(74) Mandataire: Bruder, Michel
10 rue de la Pépinière
F-75008 Paris(FR)

## Description

La présente invention concerne un nouveau procédé de production, à partir d'un substrat végétal hydrocarboné quelconque, d'un produit naturel alimentaire à haute valeur nutritionnelle, riche en arômes, en protéines et en vitamines du groupe B et ayant des propriétés fonctionnelles particulières, ainsi qu'un nouveau produit alimentaire obtenu par ce procédé et une installation mettant en oeuvre ce procédé.

On connaît déjà un procédé dans lequel on traite une matière première végétale contenant des protéines et des glucides en vue d'obtenir une composition alimentaire de haute valeur nutritionnelle, à teneur élevée en protéines. Un tel procédé qui est décrit dans le brevet FR-A-2 165 191 et qui est appliqué plus particulièrement au soja, fait intervenir, dans une première étape, l'action spécifique d'enzymes hydrosolubilisantes sur les glucides de la farine de soja et, dans une seconde étape, une fermentation des glucides hydrosolubilisés, sous l'action de levures, cette fermentation ayant pour l'effet d'augmenter la teneur en protéines de la composition et la diminution corrélative de la teneur en glucides.

La présente invention concerne des perfectionnements apportés à un tel procédé dans le but d'améliorer sensiblement les qualités du produit alimentaire obtenu.

A cet effet ce procédé de production, à partir d'un substrat végétal hydrocarboné, d'un produit naturel alimentaire dans lequel on soumet le substrat végétal hydrocarboné à une première étape d'hydrolyse, sous l'action spécifique d'enzymes hydrosolubilisantes sur les glucides de ce substrat, puis à une deuxième étape de fermentation des glucides hydrosolubilisés, sous l'action d'une levure, est caractérisé en ce qu'on pratique la fermentation en un milieu de fermentation pauvre, à pH compris entre 3 et 5, et on soumet ensuite le produit à une troisième étape de thermolyse, à une température allant de 80° à 140°C pendant une période de temps correspondante allant respectivement d'une heure à 30 secondes. On peut soumettre le produit soit à une thermolyse conventionnelle, c'est-à-dire à une température allant de 80° à 100°C, pendant une période de temps allant respectivement de 1 heure à 20 minutes, ou bien encore à une thermolyse flash à une température allant de 100° à 140°C, pendant une période de temps allant respectivement de 20 minutes à 30 secondes.

Suivant une autre caractéristique complémentaire de l'invention ou utilise, en tant que souche pour l'étape de fermentation, Candida Utilis. Cette souche de levure est parfaitement apte à la production continue des protéines de levures à l'échelle industrielle grâce à sa stabilité pendant de longues périodes de culture continue. La souche utilisée a les caractéristiques de l'espèce Candida Utilis dont la description est donnée dans l'ouvrage "The Yeasts" édité par J.LODDER North Holland Publishing Company. Elle est dénommée Candida Utilisa Ref : V-448.

On utilise un milieu de fermentation pauvre à pH relativement bas, de l'ordre de 3 à 5. Le milieu de fermentation pauvre contient uniquement du phosphore, du potassium, du soufre et de l'azote ammoniacal. Ces conditions, à savoir le traitement en continu, un milieu de fermentation pauvre, un pH de culture acide, et une souche particulièrement adaptée, permettent d'éviter toute prolifération des autres microorganismes.

La culture en continu de Candida Utilis ref: V-448 en présence d'un milieu parfaitement défini, permet de fabriquer un produit dont la composition et les qualités demeurent constantes avec le temps.

Le procédé suivant l'invention peut utiliser en tant que matière première de départ, n'importe quel substrat végétal hydrocarboné. Parmi ces matières premières on peut citer notamment:

- dans la famille des légumineuses, des quantités importantes de graines qui sont actuellement utilisées en alimentation humaine et animale, telles que les fèves, les haricots, les pois, les lentilles, etc.
- dans la famille des solanées, le tubercule de Solanum tuberosum la pomme de terre, qui est bien entendu universellement consommée, et,
- dans la famille des eurphorbiacées, la cassave (Manihot esculenta) qui fournit une racine dont on tire le manioc ou tapioca, aliment de base des pays d'Afrique, d'Amérique du Sud, etc.

Le procédé suivant l'invention permet d'obtenir un produit alimentaire riche en protéines ayant de propriétés fonctionnelles particulières. Il s'est révélé en effet avoir un pouvoir émulsifiant très élevé, pratiquement deux fois supérieur à celui de la caséine, émulsifiant couramment utilisé dans l'industrie alimentaire. Le produit obtenu se prête également très bien à une agglomération pour donner des comprimés. Il a un bon pouvoir foisonnant et une bonne aptitude à fixer les lipides.

Suivant les conditions du traitement et notamment de la mise en oeuvre de la thermolyse on peut obtenir des produits alimentaires ayant des goûts variés et agréables.

On décrira ci-après, à titre d'exemple non limitatif, une forme d'exécution de la présente invention, en référence au dessins annexés sur lesquels :

La figure1 est un schéma synoptique des sections d'hydrolyse et de fermentation d'une installation mettant en oeuvre le procédé suivant l'invention.

La figure 2 est un schéma synoptique d'une section de la thermolyse de l'installation.

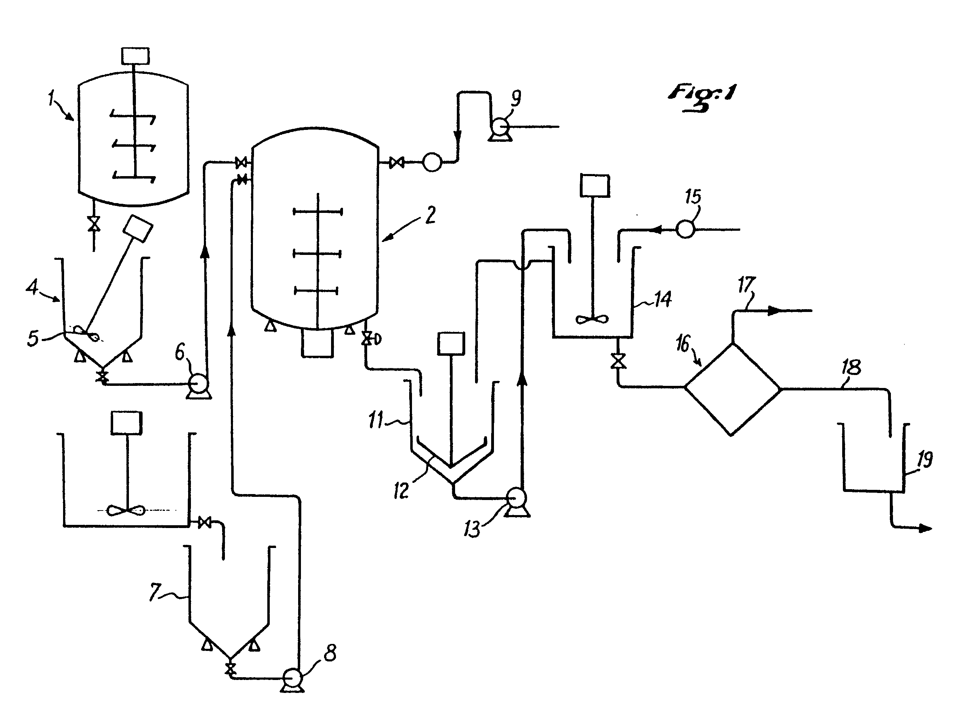

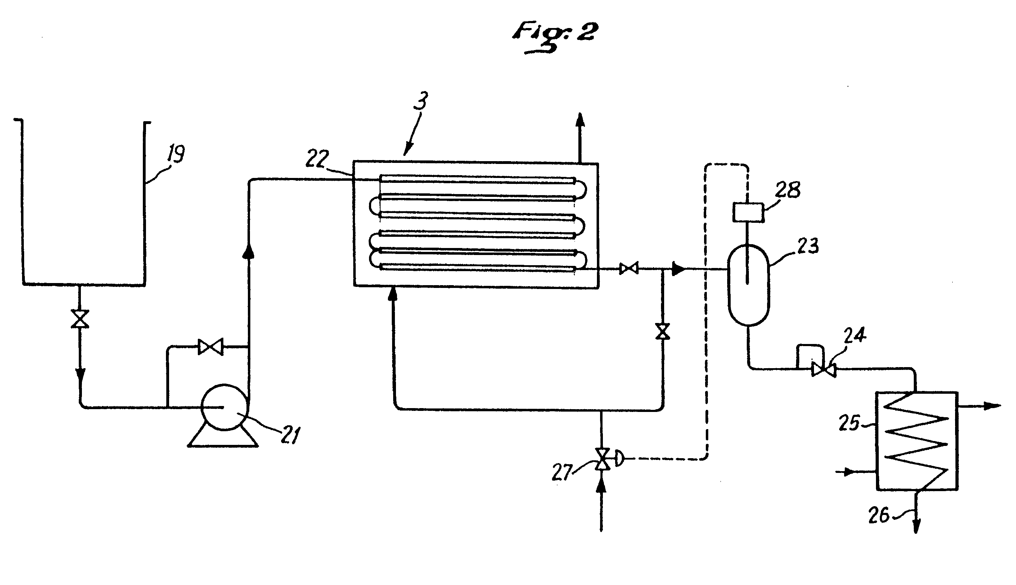

En se référant aux figures 1 et 2, on voit que le procédé suivant l'invention est mis en oeuvre dans une installation comprenant un réacteur d'hydrolyse 1, un réacteur de fermentation 2, et un étage de thermolyse en ligne 3.

Dans la description qui va suivre on considérera , à titre d'exemple d'application du procédé, le traitement, en tant que substrat végétal hydrocarboné, d'une farine de manioc contenant à l'origine 2% de protéines. Cette farine de manioc est introduite dans le réacteur d'hydrolyse 1 conjointement avec une enzyme telle que l'amylase.La première étape d'hydrolyse s'effectue, par exemple, à une température de 90°C, pendant une heure, dans le réacteur d'hydrolyse 1. Un bac tampon hydrolyseur 4 équipé d'un agitateur 5 avec variation de vitesse dans lequel se poursuit la réaction de saccharification du substrat amylacé avec une enzyme telle que l'amyloglucosidase, est disposé entre le réacteur d'hydrolyse 1 et le réacteur de fermentation 2. L'injection de l'hydrolysat dans le réacteur de fermentation 2 s'effectue au moyen d'une pompe. Le bac tampon 4 est placé sur un système de pesée afin de pouvoir comptabiliser l'hydrolysat injecté.

Le contrôle du poids du bac tampon du milieu minéral concentré 7, identique au bac tampon hydrolyseur 4 mais sans agitation, permet de contrôler le débit d'injection du milieu minéral dans le fermenteur. L'injection de milieu concentré dans le réacteur de fermentation 2 s'effectue par l'intermédiaire d'une pompe 8. Le milieu minéral de fermentation utilisé dans l'étape de fermentation est un milieu pauvre à pH de l'ordre de 3 à 5, par exemple de 3,5. Le milieu de fermentation contient uniquement du phosphore du potassium, du soufre et de l'azote ammoniacal.

Le taux de dilution utilisé, qui présente le rapport de débit d'injection du milieu minéral et du substrat carboné sur le volume liquide présent dans le fermenteur est de 0,II h-1, et la température est de 35°C. L'eau de dilution du milieu minéral est injectée dans le réacteur de fermentation 2 au moyen d'une pompe 9.

Le réacteur de fermentation 2 est placé sur un peson relié à une vanne électropneumatique. Cette installation permet de maintenir constante, au cours du temps, la quantité de moût de fermentation à l'intérieur du réacteur.

Le moût de fermentation s'écoule dans un bac tampon 11 équipé d'un agitateur 12 et ce moût est repris par une pompe 13 pour être envoyé dans un bac de lavage 14. L'eau de lavage est introduite dans le bac 14 par une pompe 15 et le débit d'eau est comptabilisé au moyen d'un compteur à eau.

Le fond du bac de lavage 14 est relié à une centrifugeuse 16, pour alimenter celle-ci en moût lavé. La centrifugeuse 16 fournit à sa sortie, , dans une première canalisation 17, un jus clair, et, dans une seconde canalisation 18, la crème de levures qui est recueillie dans un bac tampon 19.

La crème de levures recueillie dans le bac tampon 19 est reprise par une pompe 21 pour être introduite dans l'étage de thermolyse 3. Cet étage 3 comprend un échangeur de chaleur 22 du type serpentin dans lequel le produit soumis à la thermolyse est porté à une température allant de 80° à 140°C, le temps de séjour correspondant dans l'échangeur de thermolyse 22 allant de 1 heure à 30 secondes.

La sortie de l'échangeur 22 est relié à un récipient de maintien 23 qui alimente, à travers un régulateur de pression 24, un échangeur froid 25 refroidi par une circulation d'eau. Le produit alimentaire final obtenu à la suite de la transformation du substrat végétral hydrocarboné original sort en continu par une canalisation 26.

Le réglage de la température de l'échangeur 22 s'effectue par action automatique sur une vanne d'alimentation en vapeur 27 qui est commandée par un indicateur-régulateur de température 28 fixé sur la bouteille de maintien 23. L'ensemble de l'étage de thermolyse 3 est maintenu sous une pression suffisante, par l'intermédiaire du régulateur de pression 24, afin de ne pas vaporiser le liquide à thermolyser.

Les essais qui ont été effectués en traitant, en tant que substrat végétal hydrocarboné, une même farine de manioc, ont permis d'obtenir des produits alimentaires riches en protéines. La teneur en protéines du produit obtenu à partir d'une farine de manioc originale à 2% de protéines, a été portée à 42% en poids.

Par ailleurs on a constaté, suivant les conditions dans lesquelles est effectuée l'étape de thermolyse, que l'on obtient des produits alimentaires ayant des goûts typiques différents. Ainsi dans le cas de conditions d'une thermolyse flash effectuée dans l'échangeur 22 à 130°C pendant 2 minutes on obtient un produit final présentant un goût carné type poulet rôti. Si on limite la période de thermolyse à 1 minute mais toujours à une température de 130°, on obtient un produit ayant un goût de malt.

Si on réalise les conditions d'une thermolyse classique, à 85°C pendant une période de 30 minutes, on obtient un produit alimentaire ayant un goût de foie.

Le tableau ci-dessous donne, à titre d'exemple la composition d'un produit alimentaire obtenu par le traitement précité de la farine de manioc :

3

|  | % en poids |
|---|---|
| Azote total | 7,2 |
| Protéines (N x 6,25) | 45,0 |
| Lipides | 5,4 |
| Cellulose | 5,6 |
| Matières minérales | 7,1 |
| Glucides | 28,9 |
| Humidité | 8,0 |
| Sodium | 0,04 |
| Potassium | 2,2 |
| Magnésium | 0,22 |
| Calcium | 0,46 |
| Zinc | 50ppm |
| Phosphore | 1,36 |

Par ailleurs l'analyse bactériologique a montré une absence totale de bactéries pathogènes dans le produit obtenu et une flore fongique réduite. Les résultats détaillés de cette analyse sont les suivants :

| microorganismes | dénombrement |
|---|---|
| Flore totale | 100 germes/g |
| Enterobactéries | absent |
| Coliformes | absent |
| Escherichia coli | absent |
| Salmonelles | absent |
| Staphylocoques | absent |
| A.S.R.T. | absent |
| Clostridium perfrigens | absent |
| Streptocoques fécaux | absent |
| Pseudomonas | absent |
| Moisissures | 70 germes/g |
| Levures | 10 germes/g |

**Revendications**

1. Procédé de production, à partir d'un substrat végétal hydrocarboné, d'un produit naturel alimentaire dans lequel on soumet le substrat végétal hydrocarboné à une première étape d'hydrolyse, sous l'action spécifique d'enzymes hydrosolubilisantes sur les glucides de ce substrat, puis à une deuxième étape de fermentation des glucides hydrosolubilisés, sous l'action d'une levure, caractérisé en ce qu'on pratique la fermentation en un milieu de fermentation pauvre, à pH compris entre 3 et 5, et on soumet ensuite le produit à une troisième étape de thermolyse, à une température allant de 80° à 140°C pendant une période de temps correspondante allant respectivement d'une heure à 30 secondes.

2. Procédé suivant la revendication 1 caractérisé en ce qu'on soumet le produit à une thermolyse conventionnelle, à une température allant de 80° à 100°C, pendant une période de temps allant respectivement de 1 heure à 20 minutes.

3. Procédé suivant la revendication 1 caractérisé en ce qu'on soumet le produit à une thermolyse flash, à une température allant de 100° à 140°C, pendant une période de temps allant respectivement de 20 minutes à 30 secondes.

4. Procédé suivant l'une quelconque des revendications précédentes caractérisé en ce qu'on utilise, en tant que souche de levure pour l'étape de fermentation, Candida Utilis.

5. Procédé suivant la revendication 4 caractérisé en ce que le milieu de fermentation pauvre est minéral

4

et contient uniquement du phosphore, du potassium, du soufre et de l'azote ammoniacal.

6. Procédé suivant la revendication 1 caractérisé en ce que le substrat végétal hydrocarboné est du manioc.

7. Installation pour la mise en oeuvre du procédé selon l'une quelconque des revendications 1 à 6 comprenant un réacteur d'hydrolyse (1) suivi d'un réacteur de fermentation (2), caractérisée en ce qu'elle comprend, à la suite du réacteur de fermentation (2), un étage de thermolyse (3) constitué d'un échangeur de chaleur (22) relié à un récipient de maintien (23) alimentant, à travers un régulateur de pression (24), un échangeur froid (25) pourvu d'une canalisation (26) de sortie en continu du produit alimentaire obtenu en final.

8. Installation suivant la revendication 7 caractérisée en ce que l'échangeur de chaleur (22) est alimenté par une vanne d'alimentation en vapeur (27) commandée par un indicateur-régulateur de température (28) fixé sur le récipient de maintien (23).

9. Produit naturel alimentaire à haute valeur nutritionnelle, riche en arômes, en protéines et en vitamines B, obtenu par le procédé suivant l'une quelconque des revendications 1 à 6 caractérisé en ce qu'il présente un goût carné type poulet rôti si la thermolyse flash est effectuée à 130° C pendant 2 minutes.

10. Produit naturel alimentaire à haute valeur nutritionnelle, riche en arômes, en protéines et en vitamines B, obtenu par le procédé suivant l'une quelconque des revendications 1 à 6 caractérisé en ce qu'il présente un goût de malt si la période de thermolyse flash est effectuée à 130° C pendant 1 minute.

11. Produit naturel alimentaire à haute valeur nutritionnelle, riche en arômes, en protéines et en vitamines B, obtenu par le procédé suivant l'une quelconque des revendications 1 à 6 caractérisé en ce qu'il présente un goût de foie si la thermolyse (3) est classique, à 85° C pendant une période de 30 minutes.

**Claims**

1. Process for producing, from a hydrocarbon vegetable substrate, a natural food product, in which the hydrocarbon vegetable substrate is subjected to a first step of hydrolysis, under the specific action of hydrosolubilizing enzymes on the glucids of this substrate, then to a second step of fermentation of the hydrosolubilized glucids, under the action of a yeast, characterized in that the fermentation is carried out in a poor fermentation medium, with pH included between 3 and 5, and then the product is subjected to a third step of thermolysis at a temperature ranging from 80° to 140° C, for a corresponding period of time ranging respectively from one hour to 30 seconds.

2. Process of claim 1, characterized in that the product is subjected to a conventional thermolysis, at a temperature ranging from 80° to 100° C, for a period of time ranging respectively from 1 hour to 20 minutes.

3. Process of claim 1, characterized in that the product is subjected to a flash thermolysis at a temperature ranging from 100° to 140° C, for a period of time ranging respectively from 20 minutes to 30 seconds.

4. Process of anyone of the preceding claims, characterized in that Candida Utilis is used as yeast strain for the fermentation step.

5. Process of claim 4, characterized in that the poor fermentation medium is inorganic and contains solely phosphorus, potassium, sulfur and ammonia nitrogen.

6. Process of claim 1, characterized in that the hydrocarbon vegetable substrate is manioc.

7. Installation for carrying out the process according to any of the preceding claims, comprising an hydrolysis reactor (1) followed by a fermentation reactor (2) characterised in that it comprises, coming after the fermentation reactor (2), a thermolysis stage (3) constituted by a heat exchanger (22) connected to a holding recipient (23) supplying, through a pressure regulator (24), a cold exchanger (25) provided with a pipe (26) for continuously delivering the food product finally obtained.

8.  The installation of claim 7, characterized in that the heat exchanger (22) is supplied by a steam valve (27) controlled by a temperature indicator-regulator (28) fixed on the holding recipient (23).

9.  Natural food product with high nutritional value, rich in flavours, proteins and vitamins of the group B, obtained by the process of any of the claims 1 to 6 characterized in that it presents a meaty taste like roast chicken if the flash thermolysis is carried out at 130°C for 2 minutes.

10. Natural food product with high nutritional value, rich in flavours, proteins and vitamins of the group B, obtained by the process of any of the claims 1 to 6 characterized in that it presents a malty taste if the flash thermolysis period is carried out at 130°C for 1 minute.

11. Natural food product with high nutritional value, rich in flavours, proteins and vitamins of the group B, obtained by the process of any of the claims 1 to 6 characterized in that it presents a liver taste if thermolysis (3) is conventional, at 85°C for a period of 30 minutes.

**Patentansprüche**

1.  Verfahren zur Herstellung eines natürlichen Lebensmittelproduktes aus einem Substrat eines pflanzlichen Kohlehydrates, wobei man das Substrat des pflanzlichen Kohlehydrates in einem ersten Hydrolyseschritt der Wirkung spezifischer, die Kohlehydrate des Substrates hydrosolubilisierender Enzyme aussetzt und danach in einem zweiten Fermentationsschritt die hydrosolubilisierten Kohlehydrate einer Hefebehandlung aussetzt, dadurch gekennzeichnet, daß man die Fermentation in einem schwach fermentierenden Milieu bei einem pH zwischen 3 und 5 durchführt und man anschließend das Produkt einem dritten Thermolyseschritt bei einer Temperatur zwischen 80 und 140°C über einen Zeitraum, der respektive von einer Stunde bis zu 30 Sekunden reicht, unterwirft.

2.  Verfahren nach Anspruch 1, dadurch gekennzeichnet, daß man das Produkt einer herkömmlichen Thermolyse bei einer Temperatur von 80 bis 100°C während eines Zeitraumes von respektive einer Stunde bis 20 Minuten unterwirft.

3.  Verfahren nach einem der vorhergehenden Ansprüche, dadurch gekennzeichnet, daß man das Produkt einer Blitzthermolyse bei einer Temperatur von 100 bis 140°C über einen Zeitraum von respektive 20 Minuten bis 30 Sekunden unterzieht.

4.  Verfahren nach einem der vorhergehenden Ansprüche, dadurch gekennzeichnet, daß man als Hefe im Fermentationsschritt Candida Utilis verwendet.

5.  Verfahren nach Anspruch 4, dadurch gekennzeichnet, daß das schwache Fermentationsmilieu mineralisch ist und es lediglich Phosphor, Kalium, Schwefel und Ammoniakstickstoff enthält.

6.  Verfahren nach Anspruch 1, dadurch gekennzeichnet, daß das Substrat des pflanzlichen Kohlehydrates Manioka ist.

7.  Vorrichtung zum Durchführen des Verfahrens nach einem der Ansprüche 1 bis 6, umfassend einen Hydrolysereaktor (1), dem ein Fermentationsreaktor (2) nachfolgt, dadurch gekennzeichnet, daß er nach dem Fermentationsreaktor (2) eine Thermolysestufe umfaßt, die aus einem Wärmeaustauscher (22) besteht, der mit einem Aufnahmegefäß (23) verbunden ist, das über einen Druckregulator (24) einen Kälteaustauscher (25) beschickt, der mit einer Leitung (26) zum kontinuierlichen Austreten des schließlich erhaltenen Lebensmittelproduktes versehen ist.

8.  Vorrichtung nach Anspruch 7, dadurch gekennzeichnet, daß der Wärmeaustauscher (22) über ein Dampfeinlaßventil (27) beschickt wird, das mittels eines Temperaturanzeige-Regulators (28) gesteuert wird, der auf dem Aufnahmegefäß (23) befestigt ist.

9. Natürliches, an Aromastoffen, an Proteinen und an Vitamin B reichen, natürlichen Lebensmittels von hohem Ernährungswert, erhältlich gemäß dem Verfahren nach einem der Ansprüche 1 bis 6, dadurch gekennzeichnet, daß es einen Fleischgeschmack von der Art des gerösteten Hähnchens aufweist, wenn die Blitzthermolyse bei 130°C für 2 Minuten durchgeführt wird.

10. Natürliches, an Aromastoffen, an Proteinen und an Vitamin B reichen, natürlichen Lebensmittels von hohem Ernährungswert, erhältlich gemäß dem Verfahren nach einem der Ansprüche 1 bis 6, dadurch gekennzeichnet, daß es einen Malzgeschmack aufweist, wenn die Blitzthermolyse bei 130°C für die Dauer einer Minute durchgeführt wird.

11. Natürliches, an Aromastoffen, an Proteinen und an Vitamin B reichen, natürlichen Lebensmittels von hohem Ernährungswert, erhältlich gemäß dem Verfahren nach einem der Ansprüche 1 bis 6, dadurch gekennzeichnet, daß es einen Lebergeschmack aufweist, wenn die Thermolyse (3) auf herkömmliche Weise bei 85°C über einen Zeitraum von 30 Minuten durchgeführt wird.

Fig.1

EP 0 312 667 B1

Fig. 2